Europäisches Patentamt

European Patent Office

Office européen des brevets

(11) Veröffentlichungsnummer: **0 334 988**
A2

## (12) EUROPÄISCHE PATENTANMELDUNG

(21) Anmeldenummer: 88106263.2

(22) Anmeldetag: 20.04.88

(51) Int. Cl.⁴: **G01H 11/06 , G01H 1/06**

(30) Priorität: 30.03.88 DE 3810817

(43) Veröffentlichungstag der Anmeldung:
04.10.89 Patentblatt 89/40

(84) Benannte Vertragsstaaten:
AT BE CH DE FR GB IT LI LU NL

(71) Anmelder: **TELENORMA Telefonbau und Normalzeit GmbH**
**Mainzer Landstrasse 128-146**
**D-6000 Frankfurt am Main(DE)**

(72) Erfinder: **Isert, Hans, Prof. Dr. Ing.**
**Saalfeldenerstrasse 33**
**D-6074 Rödermark(DE)**
Erfinder: **Schäfer, Wolfgang, Dr. phil. nat**
**Altkönigstrasse 3b**
**D-6368 Bad Vilbel 4(DE)**

(54) Schwingungs-Sensor.

(57) Es ist ein Schwingungs-Sensor anzugeben, welcher eine oder mehrere Zungen aufweist, die durch mechanische Schwingungen angeregt werden und der besonders einfach und wirtschaftlich in kleinen Abmessungen herstellbar ist.

Die Zungen sind aus einem Substrat geätzt, wobei auf dem Substrat auch die Einrichtungen zur Umsetzung der mechanischen Schwingungen der Zunge in elektrische Signale und Einrichtungen zur Auswertung derselben auf dem Substrat untergebracht sind.

Ein derartiger Schwingungs-Sensor kann beispielsweise zur Erkennung des Verschleißes bei mechanisch bewegten Teilen benutzt werden, bei denen kritische Schwingungen den Verschleiß in einem sehr frühen Stadium anzeigen. Hierbei kann es sich beispielsweise um die Lager drehbarer Wellen von Motoren und Turbinen handeln.

## Schwingungs-Sensor

Die Erfindung betrifft einen Schwingungs-Sensor mit einer oder mehreren Zungen, die durch mechanische Schwingungen angeregt werden.

Es ist bereits bekannt, mit Hilfe von Zungen das Vorhandensein bestimmter Frequenzen anzuzeigen, indem die Länge der Zunge auf die zu erkennende Frequenz abgestimmt wird, worauf bei Vorhandensein der betreffenden Frequenz die Zunge zu schwingen beginnt.

Die Zungen können beispielsweise aus schmalen Blechstreifen gebildet werden, wobei das Material keine Rolle spielt, wenn die Erregung der Zungen auf mechanischem Wege erfolgt. Weiterhin sind sogenannte Zungenfrequenzmesser bekannt, bei welchen die Zungen aus Weicheisenblech hergestellt sind und durch magnetische Felder einer Spule erregt werden, welche von einem Wechselstrom einer bestimmten Frequenz durchflossen wird. Die Zungenfrequenzmesser weisen mehrere Zungen auf, die auf einzelne Frequenzen innerhalb eines Frequenzbereichs abgestimmt sind. Dabei schwingt in der Regel nur eine Zunge bei Vorliegen eines Wechselstroms einer bestimmten Frequenz, und zwar diejenige, welche auf diese Frequenz abgestimmt ist. Liegt die Frequenz zwischen den beiden, auf die darunter bzw. die darüber liegende Frequenz abgestimmten Zungen, so schwingen in diesem Fall beide Zungen.

Die Aufgabe der Erfindung besteht nun darin, einen Schwingungssensor der eingangs genannten Art derart auszubilden, daß dieser sehr einfach und sehr wirtschaftlich herzustellen ist.

Diese Aufgabe wird dadurch gelöst, daß die Zunge (-n) aus Substrat geätzt ist bzw. sind und daß Einrichtungen zur Umsetzung der mechanischen Schwingungen der Zunge (-n) in elektrische Signale und Einrichtungen zur Auswertung derselben auf dem Substrat untergebracht sind.

Durch die Verwendung eines gemeinsamen Substrats als Material für die Zungen und als Träger für die Einrichtungen zur Umsetzung der mechanischen Schwingungen in elektrische Signale und der Einrichtungen zur Auswertung derselben lassen sich derartige Schwingungssensoren nicht nur einfach sondern auch in sehr kleinen Abmessungen herstellen.

Eine Weiterbildung der Erfindung besteht darin, daß das Substrat aus Silizium besteht und eine elektrisch mit der bzw. den Schichten verbundene elektronische Auswerteschaltung aufweist.

Das Substrat ist dabei als integrierte Schaltung ausgebildet, wobei das Ätzen den Zungen und die Herstellung der integrierten Schaltkreisen in unterschiedlichen Fertigungsprozessen erfolgt.

Weitere Vorteile ergeben sich aus den Unteransprüchen.

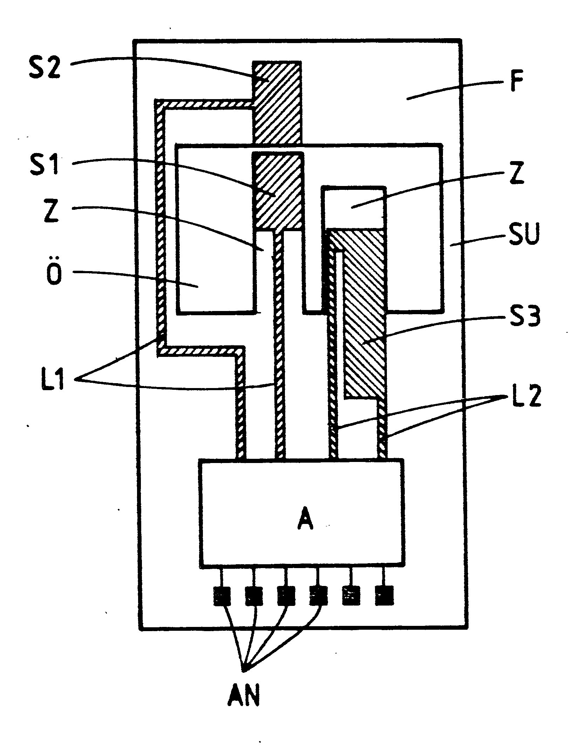

Die Erfindung wird anhand eines Ausführungsbeispiels näher erläutert, welches in der Zeichnung dargestellt ist.

Das Substrat SU besteht beispielsweise aus Silizium, wobei die in der Öffnung Ö befindlichen Zungen Z durch Ätzen hergestellt sind. Die Öffnung Ö kann nun entweder als Vertiefung oder auch als Durchbruch durch das als Blättchen ausgebildete Substrat SU ausgebildet sein. Die eine Zunge ist mit einer elektrisch leitenden Schicht S1 und der feste Teil F in Höhe der Zunge Z mit einer weiteren elektrisch leitenden Schicht S2 versehen. Beide Schichten S1 und S2 bilden die Elektroden eines Kondensators und sind über die Leitungen L1 mit der Auswerteeinrichtung A elektrisch verbunden. Die zweite Schicht S2 muß nun nicht unbedingt gegenüber dem Ende der Zunge Z angebracht sein, sie kann auch neben der Zunge oder auch unterhalb oder oberhalb derselben angebracht sein. Die Zunge Z kann auch mit einer piezoaktiven Schicht S3 versehen sein, die über die Leitungen L2 mit der Auswerteeinrichtung A verbunden ist. Das Aufbringen der Schichten S1 bis S3 und der Leitungen L1 und L2 kann durch Aufdampfen erfolgen.

Die Auswerteeinrichtung A ist als integrierte Schaltung aus Silizium bestehenden Substrat SU aufgebracht, wobei die Auswerteeinrichtung A Verstärker, Speicher, usw., enthalten kann. Deren Anschlüsse AN für die Stromversorgung und die Signalein- und -ausgänge sind zum Anschluß von Golddrähten mittels Bonden ausgebildet, welche zu den elektrischen Anschlüssen des Bausteins führen, in welchem das Substrat SU eingebettet ist.

Die Herstellung der Öffnung Ö und der Zungen Z kann in einer Reihe von Verfahrensschritten erfolgen, denen eine Reihe von weiteren Verfahrensschritten zur Herstellung der Schichten S und Leitungen L folgen. Im Anschluß daran wird dann auf dem Substrat SU die Auswerteschaltung als integrierter Schaltkreis auf dem Substrat SU hergestellt.

Die Auswerteeinrichtung A muß nun nicht unbedingt in der gleichen Ebene und auf der gleichen Seite des Substrats SU angebracht sein, es ist vielmehr auch denkbar, auf der einen Seite des Substrats SU die Schichten S und die Leitungen L und auf der anderen Seite des Substrats die Auswerteeinrichtung A aufzubringen, wobei die Leitungen L entsprechend von der einen Seite auf die andere Seite der Flächen des Substrats SU zu führen sind.

Für den Fall, daß das Substrat SU, welches für die Herstellung der als integrierte Schaltung ausgebildeten Auswerteeinrichtung A geeignet ist, ungünstige Eigenschaften bezüglich des Schwingungsverhaltens der Zungen Z aufweist oder daß aus Herstellungsgründen die Ausbildung der Zungen Z große Schwierigkeiten bereitet, ist es auch denkbar, das Substrat SU funktionsmäßig aufzuteilen, wobei zwei Substrate mit unterschiedlichen physikalischen Eigenschaften benutzt werden. Das eine Substrat begünstigt dabei die Herstellung der Zungen Z und/oder deren Schwingungsverhalten, während das andere Substrat zur Herstellung integrierter Schaltungen geeignet ist. Die mechanische und elektrische Verbindung beider Substrate kann dann beispielsweise derart erfolgen, wie dies in der Patentanmeldung P 37 35 455.8 beschrieben ist.

Der erfindungsgemäße Schwingungssensor, dessen Zungenform unterschiedliche Geometrien aufweisen kann, kann für eine bestimmte Frequenz oder auch für einen Frequenzbereich ausgebildet sein, wobei im letzteren Fall eine Vielzahl von Zungen unterschiedlicher Länge vorhanden ist. Durch Abgleichen des gewünschten Frequenzspektrums ist die Möglichkeit gegeben frequenzselektiv auf ausgewählte Schwingungen reagieren zu können. Als Anwendung für einen derartigen Schwingungssensor kommen beispielsweise die Überwachung von Lagern drehbarer Wellen, die beispielsweise von Motoren und Turbinen oder auch die mechanische Bewegung von Hubkolben in Frage, um den Verschleiß mechanisch bewegter Teile rechtzeitig erkennen zu können, der sich in einem sehr frühen Stadium durch Auftreten kritischer Schwingungen ankündigt. Weitere Anwendungsgebiete kommen auch Einbruchsmelder, Autoalarmanlagen und ganz allgemein die Erkennung spezifischer Geräusche in Frage.

**Ansprüche**

1. Schwingungs-Sensor mit einer oder mehreren Zungen, die durch mechanische Schwingungen angeregt werden,
dadurch gekennzeichnet,
daß die Zungen (-n) aus einem Substrat geätzt ist bzw. sind und daß Einrichtungen zur Umsetzung der mechanischen Schwingungen der Zunge (-n) in elektrische Signale und Einrichtungen zur Auswertung derselben auf dem Substrat untergebracht sind.

2. Schwingungs-Sensor nach Anspruch 1,
dadurch gekennzeichnet,
daß in der Umgebung der Zunge eine feste Fläche vorgesehen ist, daß Zungen mit jeweils einer elektrisch leitenden Schicht versehen sind und daß beide Schichten elektrisch voneinander isoliert sind und mit unterschiedlichen Potentialen beaufschlagt werden.

3. Schwingungs-Sensor nach Anspruch 1,
dadurch gekennzeichnet,
daß die Zunge (-n) mit einer Schicht aus piezoaktivem Material versehen ist.

4. Schwingungs-Sensor nach einem der Ansprüche 1 bis 3, dadurch gekennzeichnet,
daß das Substrat aus Silizium besteht und eine elektrisch mit der bzw. den Schichten verbundene elektronische Auswerteschaltung aufweist.

5. Schwingungs-Sensor mit einer oder mehreren Zungen, die durch mechanische Schwingungen angeregt werden, wobei die Zunge (-n) aus einem Substrat geätzt ist bzw. sind und die mechanische Schwingungen der Zungen durch entsprechende Einrichtungen in elektrische Signale umgesetzt werden, dadurch gekennzeichnet,
daß das Substrat aus einem ersten Material besteht, daß auf einem zweiten Substrat Einrichtungen zur Auswertung der elektrischen Signale vorgesehen sind, daß das zweite Substrat aus einem zweiten Material besteht und daß beide Substrate mechanisch und/oder elektrisch miteinander verbunden sind.

6. Schwingungs-Sensor nach einem der Ansprüche 1 bis 5, dadurch gekennzeichnet,
daß die Zunge (-n) und die Einrichtungen zur Auswertung in einer Ebene auf dem bzw. den Substraten angebracht sind.

7. Schwingungs-Sensor nach einem der Ansprüche 1 bis 5, dadurch gekennzeichnet,
daß die Zunge (-n) auf der oberen Fläche und die Einrichtungen zur Auswertung auf der unteren Fläche des bzw. der Substrate angebracht sind.